# DEMANDE DE BREVET EUROPEEN

(11) **EP 4 246 880 A1**
(43) Date de publication de la demande: **20.09.2023**
(21) Numéro de dépôt: 23161401.7
(22) Date de dépôt: 13.03.2023
(51) Int. Cl.: H04L 9/30, H04L 9/00

(54) **PROTECTION D'UNE CLEF SECRETE**

(30) Priorité: 18.03.2022 FR 2202419
(71) Demandeur: PROTON WORLD INTERNATIONAL N.V., 1831 Diegem (BE)
(72) Inventeur: SIMON, Thierry, 1970 Wezembeek-Oppem (BE); VAN ASSCHE, Gilles, 1200 Woluwe-St-Lambert (BE)
(74) Mandataire: Cabinet Beaumont

(57) **Abrégé**

La présente description concerne un procédé de génération d'un secret partagé (***S***) entre un premier dispositif et un deuxième dispositif (102, 104) comprenant :
- la réception, par le premier dispositif et en provenance du deuxième dispositif, d'une première clef publique (***P_{B}***) ;
- une première multiplication, par un circuit cryptographique (208) du premier dispositif, de la première clef publique par un premier scalaire (***c***), la première multiplication résultant sur un résultat intermédiaire (***Q***) ;
- la détermination de si le résultat intermédiaire est égal à la valeur d'un point ***O*** ; et
- si le résultat intermédiaire est différent de la valeur du point ***O***, une deuxième multiplication, par le circuit cryptographique, du résultat intermédiaire par un deuxième scalaire, résultant sur le secret partagé.

## Description

### Domaine technique

La présente description concerne de façon générale le domaine de la cryptographie, et en particulier un procédé et un dispositif permettant de protéger la valeur d'une clef privée utilisée pour des opérations de cryptographie sur des courbes elliptiques.

### Technique antérieure

Les méthodes de cryptographie sur courbe elliptique sont bien adaptées aux procédés de cryptographie asymétriques car elles permettent d'utiliser des clefs cryptographiques de taille réduite. Par exemple, des méthodes de cryptographie sur courbe elliptique peuvent être utilisées pour mettre en oeuvre une opération de chiffrement, d'échange de clef, d'accord de clef, de signature numérique ou d'authentification entre deux dispositifs.

Toutefois, lorsqu'une clef publique, transmise par un des deux dispositifs, est un point de la courbe elliptique utilisée dont l'ordre est inférieur ou égal au cofacteur de la courbe, il y a un risque que le tiers transmettant cette clef publique puisse déduire, à partir du résultat de l'opération cryptographique ou de l'observation des effets physiques du calcul cryptographique suite à une attaque par canal auxiliaire, au moins partiellement la valeur de la clef secrète de l'autre dispositif.

### Résumé de l'invention

Il existe un besoin d'améliorer la sécurité et la protection des clefs secrètes lors d'opérations de cryptographie asymétrique sur des courbes elliptique.

Un mode de réalisation prévoit un procédé de génération d'un secret partagé entre un premier dispositif et un deuxième dispositif comprenant :
- la réception, par le premier dispositif et en provenance du deuxième dispositif, d'une première clef publique ;
- une première multiplication, par un circuit cryptographique du premier dispositif, de la première clef publique par un premier scalaire, la première multiplication résultant sur un résultat intermédiaire ;
- la détermination de si le résultat intermédiaire est égal à la valeur d'un point ***O*** ; et
- si le résultat intermédiaire est différent de la valeur du point ***O*,** une deuxième multiplication, par le circuit cryptographique, du résultat intermédiaire par un deuxième scalaire, résultant sur le secret partagé,
la première clef publique étant un point d'une courbe elliptique d'ordre **n,** le premier scalaire étant égal à ***n*/*m*,** où **m** est le plus grand facteur entier premier de **n,** et le point ***O*** étant le point à l'infini de la courbe elliptique.

Selon un mode de réalisation, le procédé ci-dessus comprend en outre, s'il est déterminé que le résultat intermédiaire est égal au point à l'infini ***O*** :
- la transmission, à un processeur générique du premier dispositif, d'un signal d'avertissement.

Selon un mode de réalisation, le deuxième scalaire est égal à ***s_{A}c*⁻¹** module ***m*,** où ***s_{A}*** est un entier définissant une clef privée du premier dispositif, et ***c*⁻¹** est l'inverse multiplicatif du premier scalaire ***c*** module ***m*.**

Selon un mode de réalisation, la valeur ***c*⁻¹** module ***m*** est stockée dans une mémoire non volatile du premier dispositif, le procédé comprenant en outre la multiplication module ***m*** de la valeur ***c*⁻¹** par la clef privée ***s_{A}*** pour générer le deuxième scalaire.

Selon un mode de réalisation, le deuxième scalaire est stocké dans une mémoire non-volatile du premier dispositif.

Selon un mode de réalisation, l'entier ***s_{A}*** est un multiple du premier scalaire.

Selon un mode de réalisation, le premier scalaire est le cofacteur de la courbe elliptique.

Selon un mode de réalisation, la courbe elliptique est une courbe d'Edwards.

Selon un mode de réalisation, la courbe elliptique est une courbe de Weierstrass.

Selon un mode de réalisation, la courbe elliptique est une courbe de Montgomery.

Un mode de réalisation prévoit un premier dispositif comprenant un processeur cryptographique configuré pour :
- effectuer une première multiplication d'une première clef publique, transmise par un deuxième dispositif, par un premier scalaire, résultant sur un résultat intermédiaire ;
- déterminer si le résultat intermédiaire est égal à la valeur d'un point ***O*** ; et
- si le résultat intermédiaire est différent de la valeur du point ***O*,** effectuer une deuxième multiplication du résultat intermédiaire par un deuxième scalaire, résultant sur un secret partagé,
la première clef publique étant un point d'une courbe elliptique d'ordre **n,** le premier scalaire étant égal à ***n*/*m*,** où ***m*** est le plus grand facteur entier premier de **n,** et le point ***O*** étant le point à l'infini de la courbe elliptique.

Selon un mode de réalisation, le premier dispositif ci-dessus est en outre configuré pour, s'il est déterminé que le résultat intermédiaire est égal à la valeur du point à l'infini ***O*** :
- transmettre, à un processeur générique du premier dispositif, d'un signal d'avertissement
- la réalisation d'une contremesure par le processeur générique.

Un mode de réalisation prévoit un système comprenant le premier dispositif ci-dessus et le deuxième dispositif configurés pour communiquer ensemble.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente de façon très schématique et sous forme de blocs, un système comprenant deux dispositifs configurés pour communiquer des données publiques entre eux ;
la figure 2 représente de façon très schématique et sous forme de blocs, un mode de réalisation d'un des deux dispositifs représentés en figure 1 ;
la figure 3 illustre un procédé de génération d'un secret partagé selon un mode de réalisation de la présente description ; et
la figure 4 est un organigramme représentant des opérations d'un procédé de protection d'une clef secrète selon un exemple de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les propriétés des courbes elliptiques, et en particulier les propriétés des différents types de courbes elliptiques utilisées en cryptographie (telles que les courbes d'Edwards, les courbes de Weierstrass, les courbes de Montgomery etc.) sont connues de la personne du métier et ne sont pas décrites en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la présente description, les termes suivants sont utilisés avec les définitions ci-dessous :
- l'ordre d'une courbe elliptique est un nombre entier, désigné par la lettre ***n*** dans la suite de la description, décrivant le nombre de points composant la courbe elliptique ;
- le cofacteur de la courbe, désigné par la lettre c dans la suite de la description, correspond au nombre entier ***n*/*****m**,* où ***m*** est le plus grand facteur entier premier de l'entier ***n**.* Dans certains cas, le cofacteur c est égal à 1 ;
- l'élément neutre de la courbe elliptique, aussi appelé point à l'infini, est un point, désigné par la lettre ***O***, appartenant à la courbe elliptique et tel que pour tout point ***P*** de la courbe, on ait ***P* ⊕ *O* = *O* ⊕ *P* =** ***P**,* où l'opérateur **⊕** désigne l'opération de groupe, généralement dénommée addition, sur la courbe elliptique.
- la multiplication d'un point ***P*** de la courbe elliptique par un scalaire ***k,*** notée **[*k*]*P*** dans la suite de la description, correspond à ***k* - 1** applications successives de l'opérateur **⊕** au point ***P***. A titre d'exemple **[2]*P*** = ***P* ⊕ *P*.**
- un point ***P*** de la courbe elliptique et différent du point à l'infini est dit d'ordre faible, si la multiplication du point ***P*** par le cofacteur ***c*** résulte en le point à l'infini ***O*** de la courbe elliptique, en d'autres termes si **[*c*]*P*** = ***O***. Une courbe elliptique n'admet des points d'ordre faible que si son cofacteur ***c*** est différent de 1 ;
- l'inverse multiplicatif du cofacteur c module ***m*** est un nombre entier positif ***u*** et inférieur à ***m*** tel que le produit ***cu*** est égal à 1 module ***m*.**

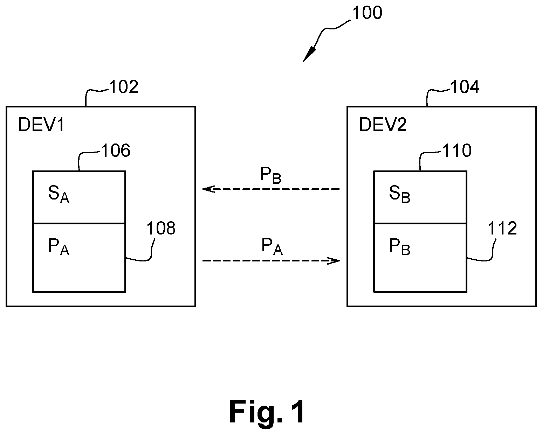

La figure 1 représente de façon très schématique et sous forme de blocs, un système 100 comprenant deux dispositifs 102 (DEV1) et 104 (DEV2) configurés pour communiquer des données publiques entre eux.

A titre d'exemple, le dispositif 102 comprend une mémoire (non illustrée en figure 1), par exemple une mémoire non volatile, dans laquelle sont stockées une clef secrète 106 (***S_{A}***) et une clef publique 108 (***P_{A}***)*.* De son côté, le dispositif 104 comprend par exemple aussi une mémoire dans laquelle sont stockées une autre clef secrète 110 (***S_{B}***) et une autre clef publique 112 (***P_{B}***)*.* En particulier, les deux clefs publiques 108 et 112 représentent chacune un point d'un sousgroupe d'ordre ***m*** d'une courbe elliptique d'ordre ***n**.* La courbe elliptique utilisée est par exemple une courbe d'Edwards, une courbe de Weierstrass, une courbe de Montgomery etc. Les deux clefs secrètes 106 et 110 sont par exemple des scalaires codés sur un nombre ***N*** de bits, où ***N*** est un nombre entier.

Chacun des deux dispositifs 102 et 104 sont en outre configurés pour échanger, selon un échange de clefs Diffie-Hellman, les clefs publiques 108 et 112. Pour ce faire, les deux dispositifs sont par exemple configurés pour communiquer par un canal sécurisé, ou non sécurisé. A titre d'exemple, la communication est une communication filaire, et l'échange des clefs publiques se fait par exemple par l'intermédiaire d'un câble reliant une interface d'un de dispositifs à une interface de l'autre dispositif. A titre d'exemple, le câble reliant les deux dispositifs 102 et 104 est un câble USB ou un câble Ethernet, une fibre optique, un câble de raccordement numérique asymétrique RNA (de l'anglais « Asymmetric Digital Subscriber Line » - ADSL) etc. Dans d'autres exemples, les deux dispositifs communiquent de manière sans-fil, telle par exemple par technologie de communication en champ proche (NFC - de l'anglais "Near Field Communication ».), par technologie Bluetooth, ou par technologie WIFI etc. Il est également possible que les dispositifs 102, 104 communiquent à travers plusieurs liaisons filaires et/ou sans-fil, et/ou à travers un ou plusieurs réseaux intermédiaires, comme l'internet. A titre d'exemple, l'échange des clefs publiques 108 et 112 entre les dispositifs 102 et 104 est effectué par canal sécurisé, c'est-à-dire après que les deux dispositifs 102 et 104 se soient authentifiés l'un auprès de l'autre. Contrairement aux clefs publiques 108 et 112, les clefs privées 106 et 110 sont propres à chacun des dispositifs 102 et 104 et devraient rester inconnues et inaccessibles pour l'autre dispositif.

Les deux dispositifs 102 et 104 sont par exemple en outre configurés pour effectuer des opérations cryptographiques sur la courbe elliptique afin de générer un secret partagé ***S**,* tel que par exemple une clef de chiffrement ou de déchiffrement, à partir de la clef publique reçue et de la clef secrète qui leur est propre. Autrement dit, le dispositif 102 génère le secret partagé ***S*** à partir de la clef publique ***P_{B}*** et de la clef secrète ***S_{A}*** et le dispositif 104 génère le même secret partagé à partir de la clef publique *P_{A}* et de la clef privée ***S_{B}***.

A titre d'exemple, le secret partagé ***S*** est obtenu par le dispositif 102 en effectuant la multiplication **[*s_{A}*]*P_{B}*** et ce même secret partagé ***S*** est obtenu par le dispositif 104 en effectuant la multiplication **[*s_{B}*]*P_{A}***.

Il est souhaitable que la valeur du scalaire ***s_{A}*** ne puisse pas être connue, même seulement en partie, à l'extérieur du dispositif 102 et en particulier par le dispositif 104. Cependant, une attaque peut être menée par le détenteur du dispositif 104 lorsque le point ***P_{B}*** est d'ordre faible. Par exemple, une telle attaque est décrite dans la publication « A Key Recovery Attack on Discrète Log-based Schemes Using a Prime Order SubGroup » de Chae Hoon Lim, Pil Joong Lee. Dans ce cas, le secret ***S*** = **[*s_{A}*]*P_{B}*** appartient à l'ensemble **{*O*,*P_{B}*,..., [*c***- **1]*P_{B}*}.** Dépendamment de l'utilisation du secret partagé ***S*** dans la suite du protocole, une recherche exhaustive est possible et permet de récupérer le secret partagé ***S*** ainsi que le scalaire ***k* ∈ {0, ..., *c*** - **1}** tel que ***S* = [*k*]*****P_{B}**.* Il est alors possible de déduire au moins partiellement la valeur du scalaire ***S_{A}***, puisque la valeur du scalaire ***S_{A}*** est égale à ***k*** module ***c***. De plus, l'attaque peut être combinée à une attaque par canaux auxiliaires, permettant au détenteur du dispositif 104 d'observer, lors du calcul du secret partagé ***S*** par le dispositif 102, à quels moments le point à l'infini ***O*** est obtenu comme résultat intermédiaire lors de la multiplication scalaire ***S*** = **[*s_{A}*]*P_{B}*** et d'en déduire au moins partiellement, ou entièrement, la valeur du scalaire ***S_{A}***.

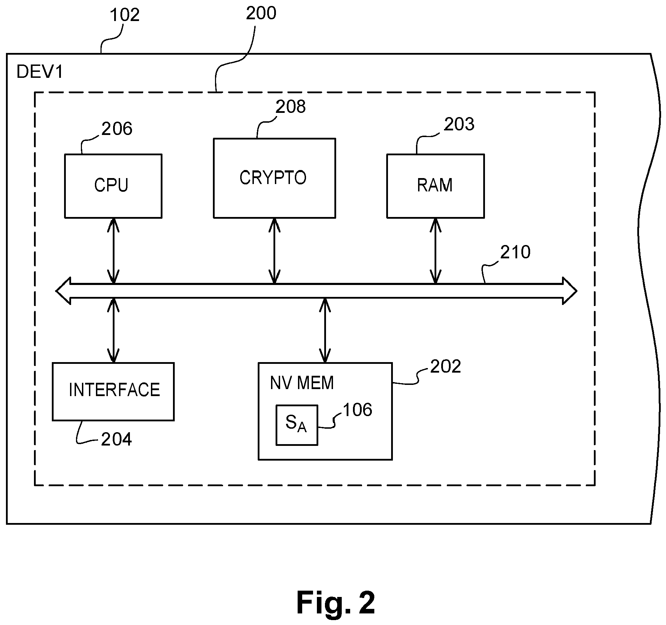

La figure 2 représente de façon très schématique et sous forme de blocs, un mode de réalisation du dispositif 102 (DEV1) représenté en figure 1.

Le dispositif 102 est par exemple une carte électronique telle qu'une carte à microcircuits, un matériel à usage informatique, un circuit à microprocesseur, etc.

Le dispositif 102 comprend un circuit intégré 200 comprenant une mémoire non volatile 202 (NV MEM) dans laquelle est par exemple stockée la clef privée 106 (***S_{A}***) ainsi qu'une mémoire volatile 203 (RAM). La clef privée ***S_{A}*** représente par exemple un scalaire codé sur un nombre ***N*** de bits. Le circuit intégré 200 comprend en outre une interface 204, par exemple configurée pour établir une connexion, filaire, ou sans-fil, avec le dispositif 104, un processeur générique 206 (CPU) ainsi qu'un processeur cryptographique 208 (CRYPTO). Les mémoires 202 et 203, ainsi que l'interface 204 et les processeurs 208 et 206 sont par exemple reliés entre eux par l'intermédiaire d'un bus 210, comprenant par exemple un bus de donnée.

A titre d'exemple, l'interface 204 est configurée pour recevoir la clef publique 112, transmise par le dispositif 104, et pour la transmettre, par l'intermédiaire du bus 210, vers le processeur cryptographique 208, où elle est par exemple stockée dans un ou plusieurs registres (non illustrés). La clef publique 112 est un point ***P_{B}*** du sousgroupe défini en amont. Le processeur cryptographique 208 est configuré pour recevoir la clef secrète 106 à partir de la mémoire non volatile 202 par l'intermédiaire du bus 210.

Le processeur cryptographique 208 est par exemple configuré pour effectuer une opération cryptographique, telle qu'une multiplication scalaire, sur la courbe elliptique à laquelle appartient le point ***P_{B}*** afin de générer le secret partagé ***S*** sur la base de la clef publique 112 et de la clef secrète 106, par exemple l'opération cryptographique ***S*** = **[*S_{A}*]*****P_{B}**.* A titre d'exemple le secret partagé ***S*** est une clef de chiffrement ou de déchiffrement.

Dans les applications visées par la présente description, le dispositif 102, et plus particulièrement le processeur cryptographique 208, est alors en outre configuré pour la mise en oeuvre d'un algorithme pour réduire le risque qu'un éventuel attaquant puisse obtenir, au moins en partie, la valeur du scalaire ***S_{A}*** en envoyant comme clef publique 112 un point ***P_{B}*** d'ordre faible.

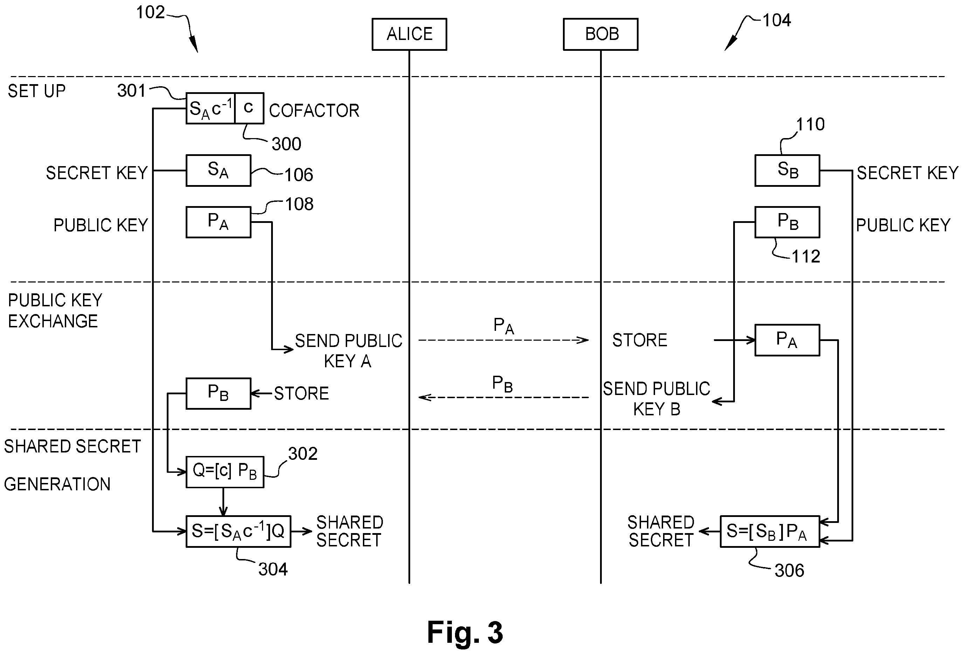

La figure 3 illustre un procédé de génération d'un secret partagé par le dispositif 102, et du même secret partagé par le dispositif 104, selon un mode de réalisation de la présente description.

En particulier, à gauche de la figure 3 (ALICE), sont illustrées des étapes d'échange de clefs Diffie-Hellman entre les dispositifs 102 et 104 et de génération du secret partagé (SHARED SECRET) par le dispositif 102. Le processeur cryptographique 208 du dispositif 102 est par exemple configuré pour la mise en oeuvre d'un algorithme de protection selon un mode de réalisation de la présente description. A droite de la figure 3 (BOB), sont illustrées des étapes d'échange de clefs Diffie-Hellman entre les dispositifs 102 et 104 et de génération du secret partagé (SHARED SECRET) par le dispositif 104. Le procédé mis en oeuvre par le dispositif 104 illustré en figure 3 ne comprend par exemple pas la mise en oeuvre de l'algorithme de protection, bien qu'il soit tout à fait possible que le dispositif 104 soit, lui aussi, configuré pour la mise en oeuvre du procédé de protection.

Dans une étape SET UP ayant par exemple lieu lors de la fabrication du dispositif 102, des valeurs 300 (COFACTOR) et 301 (***S_{A}c*^{*-*1}**)*,* la clef secrète 106 (SECRET KEY) ***S_{A}*** et la clef publique 108 (PUBLIC KEY) ***P_{A}*** sont stockées, par exemple dans la mémoire non-volatile 202. La valeur 300 correspond à la valeur c du cofacteur de la courbe elliptique. La valeur ***c*** est égale à ***n*/*****m**,* où***n*** l'ordre de la courbe elliptique et ***m*** est le plus grand facteur premier de l'entier ***n.*** Dans un autre exemple, ces valeurs sont stockées après la fabrication, par exemple durant une étape de personnalisation du dispositif 102.

Selon un mode de réalisation, la valeur 301 est une valeur ***S_{A}c⁻¹*** correspondant au produit module m de la clef privée ***S_{A}*** par une valeur de l'inverse multiplicatif ***c*⁻¹** module ***m*** du cofacteur. A titre d'exemple, selon ce mode de réalisation, la clef secrète ***S_{A}*** (106) n'est pas stockée dans une mémoire du dispositif 102, car la valeur ***S_{A}c*⁻¹** suffit.

Selon un autre mode de réalisation, la valeur 301 est uniquement la valeur de l'inverse multiplicatif ***c*⁻¹** module ***m*** du cofacteur.

Du côté du dispositif 104, uniquement la clef privée 110 ***S_{B}*** et la clef publique 112 ***P_{B}*** sont stockées, par exemple dans une mémoire du dispositif 104, durant cette étape SET UP.

L'échange des clefs publiques a lieu dans une étape PUBLIC KEY EXCHANGE. Le dispositif 102 transmet la clef publique 108 (SEND PUBLIC KEY A) au dispositif 104 et le dispositif 104 transmet la clef publique 112 (SEND PUBLIC KEY B) au dispositif 102. Chacun des dispositifs 102 et 104 stocke la clef qu'il a reçu (STORE), par exemple dans un registre de leur processeur cryptographique.

Suite à l'échange de clef, le procédé continue dans une étape de génération du secret partagé (SHARED SECRET GENERATION). Du côté du dispositif 102, les valeurs 300 et 301, ainsi que la clef privée 106, sont par exemple transmises vers des registres du processeur cryptographique 208. Du côté du dispositif 104, la clef secrète 110 est par exemple transmise vers un registre du processeur cryptographique.

Le processeur cryptographique 208 est configuré pour effectuer la multiplication de la clef publique ***P_{B}*** par le cofacteur ***c**.* La valeur résultante de cette multiplication est une valeur intermédiaire ***Q*** 302. Autrement dit, la valeur intermédiaire ***Q*** est égale à **[*c*]*****P_{B}**.* En particulier, la valeur du cofacteur c ne dépend pas de la valeur de la clef privée ***S_{A}*.** Ainsi, la valeur intermédiaire ***Q*** ne dépend pas de la valeur de la clef privée ***S_{A}*** et ne contient aucune information sur sa valeur. Et ainsi, ni la valeur du cofacteur ***c,*** ni la valeur intermédiaire ***Q,*** ne contiennent d'information sur la valeur de la clef privée ***S_{A}.*** Le processeur cryptographique 208 est configuré pour effectuer ensuite la multiplication de la valeur intermédiaire ***Q*** par un scalaire ***k*** afin de générer un secret partagé ***S*** 304. A titre d'exemple, lorsque la valeur 301 est égale à ***S_{A}c⁻¹*** module ***m***, le scalaire ***k*** est la valeur 301. Dans un autre exemple, lorsque la valeur 301 est égale à ***c*⁻¹** module ***m**,* le scalaire ***k*** est calculé, par exemple par le processeur cryptographique 208, en effectuant le produit ***k* = *S_{A}c⁻¹*** module ***m***. Le secret partagé ***S*** est alors égal à ***[S_{A}c⁻¹]Q*** et donc à ***[S_{A}]P_{B}***. Autrement dit, le secret partagé ***S*** est égal à la multiplication de la clef publique ***P_{B}*** par la clef privée ***S_{A}*.**

Selon un mode de réalisation, la valeur de la clef privée ***S_{A}*** est choisie de sorte à être un multiple du cofacteur c. Dans ce cas, le scalaire ***k*** est obtenu en calculant la division entière de ***S_{A}*** par le cofacteur c, qui est un nombre entier. Le scalaire k est alors codé sur un nombre de bits proportionnel à **log₂(*m*/*c*)**.

Dans le cas où la clef publique ***P_{B}*** est un point d'ordre faible, alors la valeur intermédiaire ***Q*** est le point à l'infini ***O*** de la courbe elliptique. A titre d'exemple, dans ce cas, le processeur cryptographique 208 ne poursuit pas la génération du secret partagé et arrête le procédé.

A titre illustratif, du côté du dispositif 104, un secret partagé 306 est directement obtenu par la multiplication de la clef publique ***P_{A}*** par la clef secrète ***S_{B}***.

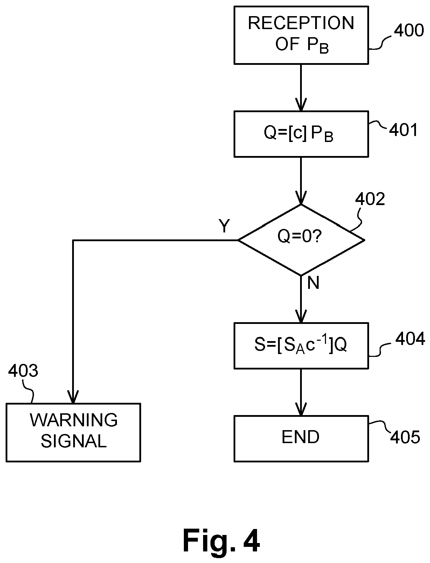

La figure 4 est un organigramme représentant des opérations d'un procédé de protection de la clef secrète ***S_{A}***, mis en oeuvre par le dispositif 102, et par exemple par le processeur cryptographique 208 du dispositif 102, selon un exemple de réalisation de la présente description.

Dans une étape 400 (RECEPTION OF ***P_{B}***), le dispositif 102 reçoit, par exemple du dispositif 104, la clef publique ***P_{B}**,* la clef publique ***P_{B}*** étant un point sur la courbe elliptique.

Dans une étape 401 (***Q* = [*c*]*P_{B}***)*,* le processeur cryptographique 208 est configuré pour effectuer la multiplication de la clef publique ***P_{B}*** par le cofacteur ***c*** de la courbe elliptique. A titre d'exemple la clef privée ***S_{A}*** est transmise au processeur cryptographique 208 par l'intermédiaire du bus 210. La multiplication résulte une valeur intermédiaire ***Q,*** qui est comparée à la valeur du point à l'infini ***O*** dans une étape 402 (***Q* = *O*** ?). A titre d'exemple, la valeur du point à l'infini est stockée dans une mémoire du dispositif 102, par exemple lors de la fabrication du dispositif 102.

Si la valeur intermédiaire ***Q*** correspond à la valeur du point à l'infini ***O*** (branche Y), alors le procédé continue dans une étape 403 (WARNING SIGNAL) dans laquelle le processeur cryptographique 208 est par exemple configuré pour transmettre un signal d'avertissement au processeur générique 206. A titre d'exemple, le processeur générique 206 est configuré pour déployer des contre-mesures dès la réception de ce signal, visant par exemple à protéger l'intégrité de données sensibles du dispositif 102 et en particulier de la clef privée ***S_{A}***. Le calcul de la valeur intermédiaire ***Q*** n'implique pas la valeur de la clef privée ***S_{A}***. Ainsi, si la valeur intermédiaire ***Q*** correspond à la valeur du point à l'infini ***O,*** la valeur de la clef privée _***S_{A}*** n'est jamais impliquée dans les opérations du procédé.

Dans le cas où la donnée intermédiaire ***Q*** ne correspond pas à la valeur du point à l'infini (branche N), le procédé continue dans une étape 404 (***Q* = [*S_{A}c***^{**-**1}**]*Q***). Lors de l'étape 404, la valeur intermédiaire ***Q*** est utilisée par le processeur cryptographique afin de calculer la valeur du secret partagé ***S.*** Dans l'étape 404, la valeur ***Q*** est multipliée par la valeur ***S_{A}c*⁻¹** module ***m*** afin de générer le secret partagé. La valeur obtenue correspond à la multiplication de la clef publique ***P_{B}*** par la clef privée ***S_{A}***. Dans un exemple la valeur ***S_{A}c*⁻¹** module ***m*** est entièrement stockée dans une mémoire du dispositif 102. Dans un autre exemple, uniquement la valeur ***c*⁻¹** module ***m*** est stockée et le produit ***S_{A}c***^{***-***1} module ***m*** est calculé, par exemple par le processeur cryptographique 208.

Une fois le secret partagé ***S*** obtenu, le procédé se termine dans une étape 405 (END) dans laquelle le secret est par exemple utilisé par le dispositif 102.

Un avantage des modes de réalisation décrits est qu'ils sont applicables sur toutes courbes elliptiques quelle que soit la valeur de leur cofacteur.

Encore un autre avantage des modes de réalisation décrits est que le secret partagé peut être généré par une simple multiplication de la valeur ***Q*** avec un scalaire.

Un autre avantage des modes décrits est que si une faute est injectée dans la multiplication ***Q* = [*c*]*P_{B}*** afin de cacher le fait que le point ***P_{B}*** est d'ordre faible, le secret partagé généré sera incorrect, autrement dit différent de **[*S_{A}*]*P_{B}***. L'attaquant ne pourra par conséquent pas utiliser la valeur du secret généré pour en déduire des informations sur la valeur de la clef privée ***S_{A}***. De plus, le résultat intermédiaire obtenu, étant fauté, risque de ne plus être un point d'ordre faible, ce qui rend l'attaque par canaux auxiliaires irréalisable.

Un autre avantage des modes de réalisation décrits est, dans le cas où la comparaison de ***Q*** avec le point à l'infini est fautée, le point à l'infini va être obtenu comme résultat intermédiaire ***Q***. Lors du calcul du secret partagé S comme multiplication du résultat intermédiaire par un scalaire, le point à l'infini sera obtenu à chaque étape du calcul quelle que soit la valeur du scalaire et donc indépendamment de la valeur de la clé privée ***S_{A}***. En particulier, l'attaque par canal auxiliaire n'est également plus réalisable.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, d'autres configurations de circuits intégré que le circuit présenté en figure 2 permettent la mise en oeuvre des procédés décrits en relation avec les figures 3 et 4. Par exemple, bien que le circuit de la figure 2 comprenne un processeur cryptographique 208, dans d'autres modes de réalisation les traitements cryptographiques décrits ici pourraient être réalisés par le processeur générique 206 ou par un autre processeur.

Enfin, la mise en oeuvre pratique des modes de réalisation et variantes décrits est à la portée de la personne du métier à partir des indications fonctionnelles données ci-dessus. En particulier, pour ce qui est du choix de la valeur 301.

## Revendications

1. Procédé de génération d'un secret partagé (***S***) entre un premier dispositif et un deuxième dispositif (102, 104) comprenant :
- la réception, par le premier dispositif et en provenance du deuxième dispositif, d'une première clef publique (***P_{B}*)** ;
- une première multiplication, par un circuit cryptographique (208) du premier dispositif, de la première clef publique par un premier scalaire (***c***), la première multiplication résultant sur un résultat intermédiaire (***Q***) ;
- la détermination de si le résultat intermédiaire est égal à la valeur d'un point ***O*** ; et
- uniquement si le résultat intermédiaire est différent de la valeur du point ***O*,** une deuxième multiplication, par le circuit cryptographique, du résultat intermédiaire par un deuxième scalaire (***k***), résultant sur le secret partagé,
la première clef publique étant un point d'une courbe elliptique d'ordre ***n*,** le premier scalaire étant égal à ***n*/*m*,** où **m** est le plus grand facteur entier premier de **n,** et le point ***O*** étant le point à l'infini de la courbe elliptique.

2. Procédé selon la revendication 1, comprenant en outre, s'il est déterminé que le résultat intermédiaire (***Q***) est égal au point à l'infini ***O*** :
- la transmission, à un processeur générique (206) du premier dispositif (102), d'un signal d'avertissement.

3. Procédé selon la revendication 1 ou 2, dans lequel le deuxième scalaire dépend de la valeur d'une clef privée (***s_{A}***) du premier dispositif et dans lequel le premier scalaire (***c***) ne dépend pas de la clef privée, la valeur intermédiaire (Q) ne contenant aucune information sur la clef privée.

4. Procédé selon la revendication 3, dans lequel le deuxième scalaire (***k***) est égal à ***S_{A}c⁻¹*** module ***m***, où ***s_{A}*** est un entier définissant la clef privée du premier dispositif, et ***c*⁻¹** est l'inverse multiplicatif du premier scalaire ***c*** module ***m***.

5. Procédé selon la revendication 4, dans lequel la valeur ***c*⁻¹** module ***m*** est stockée dans une mémoire non volatile du premier dispositif, le procédé comprenant en outre la multiplication module ***m*** de la valeur ***c*⁻¹** par la clef privée ***s_{A}*** pour générer le deuxième scalaire (***k***).

6. Procédé selon l'une quelconque des revendications 1 à 5, dans lequel le deuxième scalaire (***k***) est stocké dans une mémoire non-volatile du premier dispositif (102).

7. Procédé selon l'une quelconque des revendications 4 à 6, dans lequel l'entier ***s_{A}*** est un multiple du premier scalaire (***c***).

8. Procédé selon l'une quelconque des revendications 1 à 7, dans lequel le premier scalaire (***c***) est le cofacteur de la courbe elliptique.

9. Procédé selon l'une quelconque des revendications 1 à 8, dans lequel la courbe elliptique est une courbe d'Edwards.

10. Procédé selon l'une quelconque des revendications 1 à 8, dans lequel la courbe elliptique est une courbe de Weierstrass.

11. Procédé selon l'une quelconque des revendications 1 à 8, dans lequel la courbe elliptique est une courbe de Montgomery.

12. Premier dispositif (102) comprenant un processeur cryptographique (208) configuré pour :
- effectuer une première multiplication d'une première clef publique (***P_{B}***)*,* transmise par un deuxième dispositif, par un premier scalaire (***c***), résultant sur un résultat intermédiaire (***Q***) ;
- déterminer si le résultat intermédiaire (***Q***) est égal à la valeur d'un point ***O*** ; et
- si le résultat intermédiaire est différent de la valeur du point ***O*,** effectuer une deuxième multiplication du résultat intermédiaire par un deuxième scalaire (***k***), résultant sur un secret partagé (***S***),
la première clef publique étant un point d'une courbe elliptique d'ordre **n,** le premier scalaire étant égal à ***n*/*m*,** où ***m*** est le plus grand facteur entier premier de ***n*,** et le point ***O*** étant le point à l'infini de la courbe elliptique.

13. Premier dispositif (102) selon la revendication 12, configuré en outre pour, s'il est déterminé que le résultat intermédiaire (***Q***) est égal à la valeur du point à l'infini ***O*** :
- transmettre, à un processeur générique (206) du premier dispositif (102), d'un signal d'avertissement
- la réalisation d'une contremesure par le processeur générique.

14. Système (100) comprenant le premier dispositif (102) de la revendication 12 ou 13 et le deuxième dispositif (104) configurés pour communiquer ensemble.
